# EUROPEAN PATENT SPECIFICATION

(11) **EP 4 509 770 B1**
(45) Date of publication and mention of the grant of the patent: **18.11.2026**
(21) Application number: 24189210.8
(22) Date of filing: 17.07.2024
(51) Int. Cl.: F24H 15/325, F24D 19/10, F24H 15/238, F24H 15/414

(54) **SYSTEM FOR HEATING AND COOLING COMPRISING AT LEAST A DEVICE FOR CONTROLLING SUCH A SYSTEM FOR HEATING AND COOLING, AND CORRESPONDING METHOD**
HEIZ- UND KÜHLSYSTEM, DAS MINDESTENS EINE VORRICHTUNG ZUR STEUERUNG EINES SOLCHEN HEIZ- UND KÜHLSYSTEMS UMFASST, SOWIE ENTSPRECHENDES VERFAHREN
SYSTÈME DE CHAUFFAGE ET DE CLIMATISATION COMPRENANT AU MOINS UN DISPOSITIF DE COMMANDE D'UN TEL SYSTÈME DE CHAUFFAGE ET DE CLIMATISATION, ET PROCÉDÉ CORRESPONDANT

(30) Priority: 16.08.2023 DK PA202330154
(43) Date of publication of application: 19.02.2025
(73) Proprietor: Danfoss A/S, 6430 Nordborg (DK)
(72) Inventor: MUHIC, Miran, 6430 Nordborg (DK); FOONG KING SOON, Derek, 6430 Nordborg (DK); BOGAR, Sinisa, 6430 Nordborg (DK)
(74) Representative: Patentanwälte Olbricht Buchhold Keulertz

(56) References cited:
- DE-A1- 102011 001 223
- DE-A1- 102021 202 800
- DE-A1- 102022 107 592
- DE-A1- 19 508 319
- KR-A- 20120 082 545

## Description

The invention relates to a system for heating or cooling comprising at least one device for controlling such a system for heating and cooling, and a corresponding method.

Systems for heating and cooling are used to heat or cool buildings or devices. The systems comprise thermal energy sources, which may heat or cool a fluid, which is pumped through. The fluid being output from the thermal energy sources is provided to consumer devices via a supply line. In the consumer device, the fluid provides heating or cooling, respectively. After passing the consumer devices, the fluid is returned to the thermal energy source via a return line. For an optimal operation of the thermal energy sources, minimum input flow of fluid is required, i.e. a minimum flow in the return line is required. To provide a minimum flow in the return line in case the consumer devices are switched off or temporary do not require fluid for heating or cooling, a bypass line connects the supply line and the return line, bypassing the consumer devices. The flow in the bypass line may be controlled with a valve.

From EP 2 307 938 B2, a system is known, having a flow sensor being attached to the bypass line and a controller to control the valve of the bypass line. The controller receives the measured flow values from the flow sensor. Then, the controller determines a valve position for a flow in the bypass line and provides that valve position to an actuator of the valve.

DE 10 2011 001 223 A1 discloses a heating system with a bypass valve arranged in parallel with the heating circuit, in which a central control device modulates the heat generator, the heating-circuit pump and the bypass valve on the basis of measured temperatures and volume flow, the bypass valve being controlled by a PI controller so that the measured flow reaches a required minimum flow. KR 2012 0082545 A discloses a motor-operated flow control valve in the return duct of a hot-water distributor, having an integrated flow sensor, in which a valve driver controls the valve motor in dependence on the sensor signal to keep the flow within predetermined limits. DE 10 2021 202 800 A1 discloses a method for hydraulically balancing a fluid circuit in which the flow is not measured directly but determined indirectly from an operating state of the delivery unit. DE 195 08 319 A1 discloses a device for influencing a fluid flow using a low-loss rotary flap or ball valve, in which a control device compensates the non-linear valve characteristic and, together with a temperature sensor, forms a PID controller.

There is a need to provide an improved system for heating and cooling, a device for controlling that system, and an improved method to control the system that is easier to handle and has reduced costs.

Claims 1 and 4 indicate the main features of the invention. Features of embodiments of the invention are subject of claims 2 to 3 and 5.

In an aspect of the invention, system for heating or cooling comprising at least one device for controlling such a system is provided, the device comprising at least one valve actuator for a valve of a bypass line of the system, and a flow measuring device for a return line of the system, e. g. a flow sensor, a flow meter, or a thermal energy meter, the return line leading a combined flow from the bypass line and a heating or cooling device return line from at least one heating or cooling device to at least one thermal energy source, the flow measuring device being configured to determine and provide at least one actual flow value of the combined flow, wherein the valve actuator is configured to receive the actual flow value and to control the valve based on the actual flow value, the valve actuator and the flow measuring device comprising a direct signal connection between each other.

According to the invention, the device uses the flow value of the combined return flow of the bypass line and the heating or cooling device return line from the heating or cooling device to control the flow in the bypass line. Thus, the device provides an accurate control of the flow to the thermal energy source and can provide a minimum flow in the return line using the valve. The flow measuring device is configured to be arranged on a return line of a system for cooling and heating, wherein the valve actuator is configured to control a valve of a bypass line, for example by controlling the opening position of the valve. Particularly, the flow measuring device is configured to be arranged at a position on the combined return line, where the flow from the bypass line and the heating or cooling device flow together. Therefore, the valve actuator receives the actual flow value from the combined flow from the bypass line and the heating or cooling device to the thermal energy source. Furthermore, the valve actuator is configured to process the actual flow value to provide the control of the valve of the bypass line. Hence, the valve actuator and the flow measuring device comprise a direct signal connection between each other. The device does not require an external controller for the valve actuator for processing the actual flow values from the flow measuring device. This reduces the costs of the device. Due to the control of the valve in the bypass line with the actual flow values of the combined flow from the bypass line and the heating or cooling device to the thermal energy source, the flow in the bypass line can be adjusted to meet desired flow to the heat exchanger, accurately. Furthermore, if the heating or cooling device do not provide flow into the return line, the valve in the bypass line can be controlled such that the bypass line provides sufficient flow to meet the minimum flow requirements of the thermal energy sources. Thus, the device provides an easy handling of a system for heating or cooling.

In an example, the thermal energy source may be a heat exchanger particularly a chiller or a heat pump or similar. The heating or cooling device may for example be a fan coil unit, air handling unit, radiant panels, chilled beams and similar.

In an example, the valve actuator may be configured to provide a minimum flow in the return line by controlling the flow in the bypass line.

The valve actuator may therefore process the actual flow values such that the bypass line contributes a flow being sufficient to meet a predefined set point flow for the combined flow in the return line.

In another example, the valve actuator may further be configured to receive a minimum return flow value, to check whether the actual flow value is above the minimum return flow value, if the actual flow value is above the minimum return flow value to control the valve based on the minimum return flow value.

According to the invention, the valve actuator further comprises a motor connected to the valve and a processing unit for receiving the actual flow value and for providing at least one motor position value for the motor based on the actual flow value.

For example, the calculated set point flow value being provided by the PID controller mentioned above may be converted to a motor position value for the motor of the valve actuator to control the valve opening position.

According to the invention, the processing unit further comprises a PID controller to control the valve, particularly based on the minimum flow value for the combined flow in the return line. Furthermore according to the invention, the input of the PID controller is the difference between the minimum flow value and the actual flow value. The output of the PID controller is a calculated set point flow value.

According to the invention, a system for heating or cooling is provided, the system comprising at least one device according to the preceding description, at least one thermal energy source, at least one heating or cooling device, at least one supply line fluidly connecting an output of the thermal energy source and an input of the heating or cooling device, at least one return line fluidly connecting an output of the heating or cooling device and an input of the thermal energy source, at least one bypass line fluidly connecting the supply line and the return line in parallel connection to the heating or cooling device return line from at least one heating or cooling device, and at least one valve being mounted in the bypass line for controlling the flow in the bypass line, the valve actuator being mounted on the valve to control the valve, wherein the flow measuring device is mounted on the return line to communicate flow data to the valve actuator.

The effects and further embodiments of the system according to the present invention are analogous to the effects and embodiments of the device according to the description mentioned above. Thus, it is referred to the above description of the device.

In a second aspect of the invention, a method for controlling a system for heating or cooling according to the preceding description is provided, the method comprising at least the following steps: determine at least one actual flow value of a combined flow from the bypass line and the heating or cooling device to the thermal energy source using the flow measuring device; receive the at least one actual flow value with the valve actuator; and control the valve based on the actual flow value using the valve actuator.

In an example, the method may further comprise the steps: receive a minimum flow value with the valve actuator, check whether the actual flow value is above the minimum flow value with the valve actuator, if the actual flow value is above the minimum flow value: control the valve based on the minimum flow value with the valve actuator.

The steps: check whether the actual flow value is above the minimum flow value with the valve actuator, if the actual flow value is above the minimum flow value: control the valve based on the minimum flow value with the valve actuator may for example be sub-steps of the step control the valve based on the actual flow value using the valve actuator.

The effects and further embodiments of the method according to the present invention are analogous to the effects and embodiments of the device and the system according to the description mentioned above. Thus, it is referred to the above description of the device and the system.

Further features, details and advantages of the invention result from the wording of the claims as well as from the following description of exemplary embodiments based on the drawings. The figures show:
Fig. 1 a schematic drawing of the system heating and cooling with the device for controlling the system; and
Fig. 2 a flow chart of the method for controlling the system.

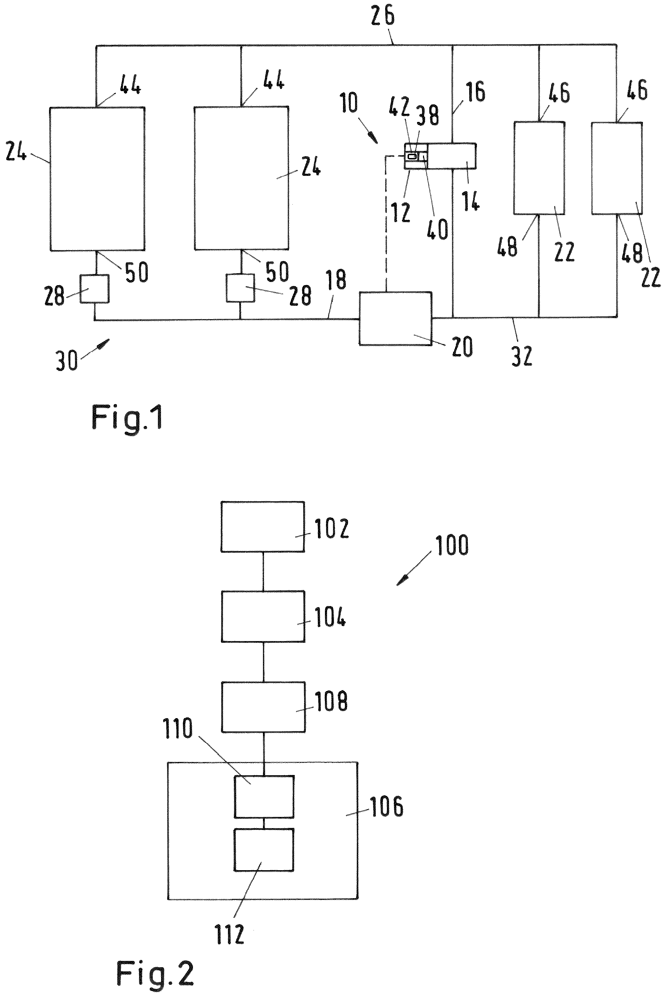

Fig. 1 shows a schematic drawing of an example of a system 30 for heating and cooling. The system 30 comprises at least one heating and cooling device 22, which may also be called consumer device. In this example, the system 30 comprises two heating and cooling devices 22. Each heating and cooling device 22 comprises an input 46 and an output 48.

Furthermore, the system 30 comprises at least one thermal energy source 24, wherein in this example, the system 30 comprises two thermal energy sources 24. Each thermal energy source 24 comprises an input 50 and an output 44 for a heating or cooling fluid.

The system 30 further comprises a supply line 26 fluidly connecting the output 44 of the thermal energy source 24 to the input 46 of the heating or cooling device 22 and a heating and cooling device return line 32 fluidly connecting all outputs 48 of the heating or cooling devices 22 to a combined return line 18. The combined return line 18, combines the flow from the bypass line 16 and the heating or cooling device return line 32 from the heating and cooling device 22 to the input 50 of the thermal energy source 24.

Furthermore, the system 30 further comprises a bypass line 16 fluidly connecting the supply line 26 to the combined return line 18. The bypass line 16 bypasses the heating or cooling devices 22 and comprises a valve 14. The valve 14 controls the flow in the bypass line 16. For example, an opening position of the valve 14 may control the flow, i.e. the wider the opening position of the valve 14, the higher the flow in the bypass line 16.

The valve 14 may be arranged in the bypass line 16 such that the valve 14 interrupts the bypass line 16. Thus, the valve 14 may be configured such that it does not directly control the flow to the inputs 46 of the heating or cooling devices 22.

The system 30 further comprises a device 10 for controlling the system 30. The device 10 comprises a valve actuator 12 and a flow measuring device 20.

The flow measuring device 20 is arranged on the return line 18 at a position leading a combined flow from the bypass line 16 and the heating or cooling device return line 32 from the heating or cooling device 22 to the thermal energy source 24. Thus, the flow measuring device 20 measures the flow being provided to the input 50 of the thermal energy source 24. Furthermore, the flow measuring device 20 may provide actual flow values indicating the actual flow of the combined flow in the return line 18.

The flow measuring device 20 provides the actual flow value to the valve actuator 12, directly. The flow measuring device 20 may for example use an ultrasonic, electromagnetic, or mechanical measurement element or others, to determine the actual flow value in the return line 18. The flow measuring device 20 may be a flow sensor, a flow meter or a thermal energy meter.

The valve actuator 12 is attached to the valve 14. Furthermore, the valve actuator 12 may comprise a motor 40 to change the opening position of the valve 14. A processing unit 42 of the valve actuator 12 may provide motor position values determined from the actual flow measuring values from the flow meter device 20.

The processing unit 42 may for example be a microcontroller of the valve actuator 12. According to the invention, the processing unit 42 comprises a PID 38.

Fig. 2 shows a flow chart of the method 100 for controlling the system for heating or cooling according to the description mentioned above.

In a step 102, at least one actual flow value of a combined flow from the bypass line and the heating and cooling device to the thermal energy source of the system is determined. The determination is performed using the flow meter device arranged on the return line of the system. The flow meter device measures the input flow of the at least one thermal energy source. Furthermore, the flow meter device may provide actual flow data.

The valve actuator of the system receives the actual flow value in a step 104. Thus, the steps 102 and 104 may be performed at the same time and repeatedly.

In an optional step 108, the valve actuator may receive a minimum flow value. This value may be used with the actual flow values to provide motor position values for controlling the valve in the bypass line.

In a further step 106, the valve actuator controls the valve in the bypass line based on the minimum flow value.

In an optional sub-step 110 of step 106, the valve actuator may check whether actual flow value is higher than the minimum flow value. If the actual flow value is above the minimum flow value, the valve actuator may control the valve based on the difference between the minimum flow value and the actual flow value according to a further optional sub-step 112.

The invention is not limited to one of the aforementioned embodiments. It can be modified in many ways.

All features and advantages resulting from the claims, the description and the drawing, including constructive details, spatial arrangements and procedural steps, may be essential for the invention both in themselves and in various combinations.

### List of reference signs

- 10: device for controlling a system for heating and cooling
- 12: valve actuator
- 14: valve
- 16: bypass line
- 18: combined return line
- 20: flow meter device
- 22: heating or cooling device
- 24: thermal energy source
- 26: supply line
- 28: compressor
- 30: system for heating and cooling
- 32: heating or cooling device return line
- 38: PID controller
- 40: motor
- 42: processing unit
- 44: output of the thermal energy source
- 46: input of the heating or cooling device
- 48: output of the heating or cooling device
- 50: input of the thermal energy source

## Claims

1. System (30) for heating or cooling, the system (30) comprising at least one device (10) for controlling a system (30) for heating or cooling, at least one thermal energy source (24), at least one heating or cooling device (22), at least one supply line (26) fluidly connecting an output (44) of the thermal energy source (24) and an input (46) of the heating or cooling device (22), at least one return line (18) fluidly connecting an output (48) of the heating or cooling device (22) and an input (50) of the thermal energy source (24), at least one bypass line (16) fluidly connecting the supply line (26) and the return line (18) in parallel connection to a heating or cooling device return line (32) from the at least one heating or cooling device (22), and at least one valve (14) being mounted in the bypass line (16) for controlling the flow in the bypass line (16), the device (10) comprising at least one valve actuator (12) for a valve (14) of a bypass line (16) of the system (30), the valve actuator (12) being mounted on the valve (14) to control the valve (14), the valve actuator (12) comprises a motor (40) connected to the valve (14) and the device (10) further comprising a flow measuring device (20) being mounted on the return line (18) to communicate flow data to the valve actuator (12), the return line (18) leading a combined flow from the bypass line (16) and a heating or cooling device return line (32) from the at least one heating or cooling device (22) to the at least one thermal energy source (24), the flow measuring device (20) being configured to determine and provide at least one actual flow value of the combined flow, **characterized in that** the valve actuator (12) is configured to receive the actual flow value and to control the valve (14) based on the actual flow value, the valve actuator (12) and the flow measuring device (20) comprising a direct signal connection between each other, wherein the valve actuator (12) comprises a processing unit (42) for receiving the actual flow value and for providing at least one motor position value for the motor (40) based on the actual flow value, wherein the processing unit (42) comprises a PID controller (38) to control the valve (14), the input of the PID controller being the difference between a minimum flow value and the actual flow value, the output of the PID controller being a calculated set point flow value.

2. System (30) according to claim 1, wherein the valve actuator (12) is configured to provide a minimum flow in the return line (18) by controlling the flow in the bypass line (16).

3. System (30) according to claim 1 or 2, wherein the valve actuator (12) is further configured to receive a minimum return flow value, to check whether the actual flow value is above the minimum flow value, if the actual flow value is above the minimum flow value to control the valve (14) based on the minimum flow value.

4. Method for controlling a system for heating or cooling according to one of claims 1 to 3, the method (100) comprising at least the following steps:
- determine (102) at least one actual flow value of a combined flow from the bypass line and the heating or cooling device to the thermal energy source using the flow measuring device;
- receive (104) the at least one actual flow value with the valve actuator; and
- control (106) the valve based on the actual flow value using the valve actuator.

5. Method according to claim 4, wherein the method further comprises the steps:
- receive (108) a minimum flow value with the valve actuator,
- check (110) whether the actual flow value is above the minimum flow value with the valve actuator,
- if the actual flow value is above the minimum flow value: control (112) the valve based on the difference between the minimum flow value and the actual flow value with the valve actuator.

## Patentansprüche

1. System (30) zum Heizen oder Kühlen, das System (30) umfassend mindestens eine Vorrichtung (10) zum Steuern eines Systems (30) zum Heizen oder Kühlen, mindestens eine Wärmeenergiequelle (24), mindestens eine Heiz- oder Kühlvorrichtung (22), mindestens eine Versorgungsleitung (26), die einen Ausgang (44) der Wärmeenergiequelle (24) und einen Eingang (46) der Heiz- oder Kühlvorrichtung (22) fluidisch verbindet, mindestens eine Rückführleitung (18), die einen Ausgang (48) der Heiz- oder Kühlvorrichtung (22) und einen Eingang (50) der Wärmeenergiequelle (24) fluidisch verbindet, mindestens eine Bypassleitung (16), die die Versorgungsleitung (26) und die Rückführleitung (18) in paralleler Verbindung mit einer Heiz- oder Kühlvorrichtungsrückführleitung (32) von der mindestens einen Heiz- oder Kühlvorrichtung (22) fluidisch verbindet, und mindestens ein Ventil (14), das zum Steuern der Strömung in der Bypassleitung (16) in der Bypassleitung (16) befestigt ist, die Vorrichtung (10) umfassend mindestens einen Ventilaktuator (12) für ein Ventil (14) einer Bypassleitung (16) des Systems (30), wobei der Ventilaktuator (12) an dem Ventil (14) befestigt ist, um das Ventil (14) zu steuern, der Ventilaktuator (12) einen Motor (40) umfasst, der mit dem Ventil (14) verbunden ist, und die Vorrichtung (10) ferner umfassend eine Strömungsmessvorrichtung (20), die an der Rücklaufleitung (18) befestigt ist, um Strömungsdaten an den Ventilaktuator (12) zu übermitteln, wobei die Rückführleitung (18) einen kombinierten Strom von der Bypassleitung (16) und einer Heiz- oder Kühlvorrichtungsrückführleitung (32) von der mindestens einen Heiz- oder Kühlvorrichtung (22) zu der mindestens einen Wärmeenergiequelle (24) führt, wobei die Strömungsmessvorrichtung (20) dazu ausgelegt ist, mindestens einen tatsächlichen Strömungswert des kombinierten Stroms zu bestimmen und bereitzustellen, **dadurch gekennzeichnet, dass** der Ventilaktuator (12) dazu ausgelegt ist, den tatsächlichen Strömungswert zu empfangen und das Ventil (14) basierend auf dem tatsächlichen Strömungswert zu steuern, der Ventilaktuator (12) und die Strömungsmessvorrichtung (20) umfassend eine direkte Signalverbindung zwischen einander, wobei der Ventilaktuator (12) eine Verarbeitungseinheit (42) zum Empfangen des tatsächlichen Strömungswerts und zum Bereitstellen mindestens eines Motorpositionswerts für den Motor (40) basierend auf dem tatsächlichen Strömungswert umfasst, wobei die Verarbeitungseinheit (42) eine PID-Steuerung (38) zum Steuern des Ventils (14) umfasst, wobei die Eingabe der PID-Steuerung die Differenz zwischen einem Mindestströmungswert und dem tatsächlichen Strömungswert ist, wobei die Ausgabe des PID-Reglers ein berechneter Sollströmungswert ist.

2. System (30) nach Anspruch 1, wobei der Ventilaktuator (12) dazu ausgelegt ist, eine Mindestströmung in der Rückführleitung (18) durch Steuern der Strömung in der Bypassleitung (16) bereitzustellen.

3. System (30) nach Anspruch 1 oder 2, wobei der Ventilaktuator (12) ferner dazu ausgelegt ist, einen Mindestrückströmungswert zu empfangen, um zu prüfen, ob der tatsächliche Strömungswert über dem Mindestströmungswert liegt, falls der tatsächliche Strömungswert über dem Mindestströmungswert liegt, um das Ventil (14) basierend auf dem Mindestströmungswert zu steuern.

4. Verfahren zum Steuern eines Systems zum Heizen oder Kühlen nach einem der Ansprüche 1 bis 3, das Verfahren (100) umfassend mindestens die folgenden Schritte:
- Bestimmen (102) mindestens eines tatsächlichen Strömungswerts einer kombinierten Strömung von der Bypassleitung und der Heiz- oder Kühlvorrichtung zu der Wärmeenergiequelle unter Verwendung der Strömungsmessvorrichtung;
- Empfangen (104) des mindestens einen tatsächlichen Strömungswerts mit dem Ventilaktuator; und
- Steuern (106) des Ventils anhand des tatsächlichen Strömungswerts mit dem Ventilaktuator.

5. Verfahren nach Anspruch 4, **dadurch gekennzeichnet, dass** das Verfahren ferner die Schritte umfasst:
- Empfangen (108), mit dem Ventilaktuator, eines Mindestströmungswerts,
- Prüfen (110), mit dem Ventilaktuator, ob der tatsächliche Strömungswert über dem Mindestströmungswert liegt,
- wenn der aktuelle Strömungswert über dem Mindestströmungswert liegt: Steuern (112), mit dem Ventilaktuator, des Ventils anhand der Differenz zwischen dem Mindestströmungswert und dem aktuellen Strömungswert.

## Revendications

1. Système (30) de chauffage ou de climatisation, le système (30) comprenant au moins un dispositif (10) destiné à commander un système (30) de chauffage ou de climatisation, au moins une source d'énergie thermique (24), au moins un dispositif de chauffage ou de climatisation (22), au moins une conduite d'alimentation (26) reliant fluidiquement une sortie (44) de la source d'énergie thermique (24) et une entrée (46) du dispositif de chauffage ou de climatisation (22), au moins une conduite de retour (18) reliant fluidiquement une sortie (48) du dispositif de chauffage ou de climatisation (22) et une entrée (50) de la source d'énergie thermique (24), au moins une conduite de dérivation (16) reliant fluidiquement la conduite d'alimentation (26) et la conduite de retour (18) en liaison parallèle à une conduite de retour (32) de dispositif de chauffage ou de climatisation depuis l'au moins un dispositif de chauffage ou de climatisation (22), et au moins une vanne (14) étant montée dans la conduite de dérivation (16) pour réguler l'écoulement dans la conduite de dérivation (16), le dispositif (10) comprenant au moins un actionneur de vanne (12) pour une vanne (14) d'une conduite de dérivation (16) du système (30), l'actionneur de vanne (12) étant monté sur la vanne (14) pour commander la vanne (14), l'actionneur de vanne (12) comprenant un moteur (40) relié à la vanne (14) et le dispositif (10) comprenant en outre un dispositif de mesure d'écoulement (20) monté sur la conduite de retour (18) pour communiquer des données d'écoulement à l'actionneur de vanne (12), la conduite de retour (18) acheminant un écoulement combiné depuis la conduite de dérivation (16) et une conduite de retour (32) de dispositif de chauffage ou de climatisation depuis l'au moins un dispositif de chauffage ou de climatisation (22) jusqu'à l'au moins une source d'énergie thermique (24), le dispositif de mesure d'écoulement (20) étant conçu pour déterminer et fournir au moins une valeur d'écoulement réel de l'écoulement combiné, **caractérisé en ce que** l'actionneur de vanne (12) est conçu pour recevoir la valeur d'écoulement réel et pour commander la vanne (14) en fonction de la valeur d'écoulement réel, l'actionneur de vanne (12) et le dispositif de mesure d'écoulement (20) comprenant une liaison directe par signal entre eux, l'actionneur de vanne (12) comprenant une unité de traitement (42) destinée à recevoir la valeur d'écoulement réel et à fournir au moins une valeur de position de moteur pour le moteur (40) en fonction de la valeur d'écoulement réel, l'unité de traitement (42) comprenant un dispositif de commande PID (38) pour commander la vanne (14), l'entrée du dispositif de commande PID étant la différence entre une valeur d'écoulement minimal et la valeur d'écoulement réel, la sortie du dispositif de commande PID étant une valeur d'écoulement de point de consigne calculée.

2. Système (30) selon la revendication 1, l'actionneur de vanne (12) étant conçu pour fournir un écoulement minimal dans la conduite de retour (18) en régulant l'écoulement dans la conduite de dérivation (16).

3. Système (30) selon la revendication 1 ou 2, l'actionneur de vanne (12) étant en outre conçu pour recevoir une valeur d'écoulement de retour minimal, pour vérifier si la valeur d'écoulement réel est supérieure à la valeur d'écoulement minimal, si la valeur d'écoulement réel est supérieure à la valeur d'écoulement minimal pour commander la vanne (14) en fonction de la valeur d'écoulement minimal.

4. Procédé de commande d'un système de chauffage ou de climatisation selon l'une des revendications 1 à 3, le procédé (100) comprenant au moins les étapes consistant à :
- déterminer (102) au moins une valeur d'écoulement réel d'un écoulement combiné depuis la conduite de dérivation et le dispositif de chauffage ou de climatisation jusqu'à la source d'énergie thermique à l'aide du dispositif de mesure d'écoulement ;
- recevoir (104) l'au moins une valeur d'écoulement réel avec l'actionneur de vanne ; et
- commander (106) la vanne en fonction de la valeur d'écoulement réel à l'aide de l'actionneur de vanne.

5. Procédé selon la revendication 4, le procédé comprenant en outre les étapes consistant à :
- recevoir (108) une valeur d'écoulement minimal avec l'actionneur de vanne,
- vérifier (110) si la valeur d'écoulement réel est supérieure à la valeur d'écoulement minimal avec l'actionneur de vanne,
- si la valeur d'écoulement réel est supérieure à la valeur d'écoulement minimal : commander (112) la vanne en fonction de la différence entre la valeur d'écoulement minimal et la valeur d'écoulement réel avec l'actionneur de vanne.
